# EUROPEAN PATENT APPLICATION

(11) **EP 4 258 679 A1**
(43) Date of publication of application: **11.10.2023**
(21) Application number: 23164978.1
(22) Date of filing: 29.03.2023
(51) Int. Cl.: H04N 25/30, H04N 25/68

(54) **DIGITAL DETECTOR ARRAY CORRECTION**

(30) Priority: 05.04.2022 US 202263327511 P; 22.03.2023 US 202318124754
(71) Applicant: Baker Hughes Holdings LLC, Houston, TX 77073 (US)
(72) Inventor: ROTH, Holger, 70499 Stuttgart (DE)
(74) Representative: Illingworth-Law, William Illingworth

(57) **Abstract**

A system including a computing device, including at least one processor, communicatively coupled to a digital detector array (DDA) including a plurality of functioning pixels and one or more defective pixels. The processor is configured to receive first data characterizing defective pixels and their positions, and receive second data characterizing a first inspection image of an object, wherein the first inspection image includes dark regions aligned with the defective pixels. The processor is also configured to determine a shift setting based on the first data and/or the second data. The shift setting includes a measure of physical adjustment to be applied to the DDA or the object. The processor is also configured to provide the shift setting to a positioning device configured to shift the DDA and/or the object, receive third data characterizing a second inspection image, and apply at least a portion of the second inspection image to the first inspection image.

## Description

### RELATED APPLICATION

This application claims priority under 35 U.S.C. § 119(e) to U.S. Provisional Application No. 63/327,511 filed on April 5, 2022, the entire contents of which are hereby expressly incorporated by reference herein.

### TECHNICAL FIELD

The subject matter described herein relates to a digital detector array.

### BACKGROUND

Sensors, such as X-ray sensors, can be used to detect defects in objects. Sensors, such as X-ray sensors can include arrays of digital detector elements configured to sense the defects within the object. The arrays of digital detector elements, known as digital detector arrays (DDA) can have defective locations at one or more array elements.

### SUMMARY

In one aspect, a system for correcting a scan produced using a DDA having one or more defective pixels is provided. In some embodiments, the system can include a computing device, including a memory storing computer-executable instructions and at least one data processor communicatively coupled to a digital detector array (DDA) including a plurality of functioning pixels and one or more defective pixels. The at least one data processor can be configured to execute the instructions, which cause the at least one data processor to perform operations including: receiving, from the DDA, first data characterizing the one or more defective pixels within the DDA and their corresponding positions, receiving, from the DDA, second data characterizing a first inspection image of an object scanned using the DDA, wherein the first inspection image includes one or more dark regions aligned with the one or more defective pixels, determining a first shift setting based on the first data and/or the second data, wherein the first shift setting includes a first measure of physical adjustment to be applied to the DDA relative to the object or the object relative to the DDA, providing the first shift setting to a positioning device configured to shift the DDA relative to the object or the object relative to the DDA, receiving, from the DDA, third data characterizing a second inspection image of the object scanned using the DDA, and applying at least a portion of the second inspection image to the first inspection image.

In another embodiment, the at least one data processor can be further configured to perform operations further including: providing the first inspection image including the applied at least a portion of the second image to a user interface display communicatively coupled to the computing device.

In another embodiment, the determining of the first shift setting, by the at least one processor can further include: determining a largest dark region of the one or more dark regions, and determining the first measure of physical adjustment such that the largest dark region is positioned over an area of functioning pixels of the plurality of functioning pixels.

In another embodiment, the determining of the first shift setting, by the at least one processor can further include: determining that one or more dark regions other than the largest dark region are positioned over one or more defective pixels, and determining a second measure of physical adjustment to be applied to the DDA relative to the object or the object relative to the DDA such that the one or more dark regions other than the largest dark region are positioned over an area of functioning pixels of the plurality of functioning pixels.

In another embodiment, the first measure of physical adjustment can include a measure of movement in a first direction and the second measure of physical adjustment further includes a measure of movement in a second direction.

In another embodiment, the first measure of physical adjustment can incldue a first measure of rotation about a first predetermined axis and/or the second measure of physical adjustment includes a second measure of rotation about a second predetermined axis.

In another embodiment, the system can further include the positioning device chosen from any one of a C-arm system, a robotic arm system, and a motorized linear stage.

In another embodiment, the applying can further include: registering the second image to the first image, the registering including replacing the pixel values of the one or more defective pixels in the first inspection image with the corresponding pixel values in the second inspection image.

In another embodiment, the registering can include performing intensity normalization on the second data and/or the third data.

In another aspect, a system for correcting a scan produced using a DDA having one or more defective pixels and one or more gaps is provided. In some embodiments, the system can include: a computing device, including a memory storing computer-executable instructions and at least one data processor communicatively coupled to a plurality of digital detector arrays (DDAs) placed serially next to one another with a gap of a plurality of gaps defined between each DDA in the plurality. Each DDA in the plurality can include a plurality of functioning pixels and one or more defective pixels, and the at least one data processor can be configured to execute the instructions, which cause the at least one data processor to perform operations that can include: receiving, from the plurality of DDAs, first data characterizing the one or more defective pixels of the plurality of pixels of the plurality of DDAs and their corresponding positions, receiving, from the plurality of DDAs, second data characterizing the plurality of gaps between the plurality of DDAs and their corresponding positions, receiving, from the plurality of DDAs, third data characterizing a first inspection image of an object scanned using the plurality of DDAs, wherein the first inspection image includes one or more dark regions aligned with the one or more defective pixels and the plurality of gaps, determining a first shift setting based on the first data, the second data and/or the third data, wherein the first shift setting includes a first measure of physical adjustment to be applied to the plurality of DDAs relative to the object or the object relative to the plurality of DDAs, providing the first shift setting to a positioning device configured to shift the plurality of DDAs relative to the object, receiving, from the plurality of DDAs, fourth data characterizing a second inspection image of the object scanned using the plurality of DDAs, and applying at least a portion of the second inspection image to the first inspection image.

In another embodiment, the determining of the first shift setting, by the at least one processor can further include: determining a largest dark region of the one or more dark regions, and determining the first measure of physical adjustment such that the largest dark region is positioned over an area of functioning pixels of the plurality of functioning pixels.

In another embodiment, the determining of the first shift setting, by the at least one processor can further include: determining that one or more dark regions other than the largest dark region are positioned over one or more defective pixels, and determining a second measure of physical adjustment to be applied to the plurality of DDAs relative to the object or the object relative to the plurality of DDAs such that the one or more dark regions other than the largest dark region are positioned over an area of functioning pixels of the plurality of functioning pixels.

In another aspect, a method for correcting a scan produced using a DDA having one or more defective pixels provided. In some embodiments, the method can include: receiving, by at least one processor of a computing system, first data characterizing one or more defective pixels of a plurality of pixels of a digital detector array (DDA) and their corresponding positions, the DDA including a plurality of functioning pixels and the one or more defective pixels, receiving, by the at least one processor, second data characterizing a first inspection image of an object scanned using the DDA, wherein the first inspection image includes one or more dark regions aligned with the one or more defective pixels, determining, by the at least one processor, a first shift setting based on the first data and/or the second data, wherein the first shift setting includes a first measure of physical adjustment to be applied to the DDA relative to the object or the object relative to the DDA, shifting, by a positioning device, the DDA relative to the object or the object relative to the DDA based on the first shift setting, receiving, from the DDA, third data characterizing a second inspection image of the object scanned using the DDA, and applying at least a portion of the second inspection image to the first inspection image.

In another embodiment, the method can further include: providing the first inspection image including the applied at least a portion of the second image to a user interface display communicatively coupled to the computing device.

In another embodiment, the determining of the first shift setting can further include: determining a largest dark region of the one or more dark regions, and determining the first measure of physical adjustment such that the largest dark region is positioned over an area of functioning pixels of the plurality of functioning pixels.

In another embodiment, the determining of the first shift setting can further include: determining that one or more dark regions other than the largest dark region are positioned over one or more defective pixels, and determining a second measure of physical adjustment to be applied to the DDA relative to the object or the object relative to the DDA such that the one or more dark regions other than the largest dark region are positioned over an area of functioning pixels of the plurality of functioning pixels.

In another embodiment, the first measure of physical adjustment can include a measure of movement in a first direction and the second measure of physical adjustment include a measure of movement in a second direction.

In another embodiment, the first measure of physical adjustment can include a first measure of rotation about a first predetermined axis and/or the second measure of physical adjustment can include a second measure of rotation about a second predetermined axis.

In another embodiment, the applying can further include: registering the second image to the first image, the registering including replacing the pixel values of the one or more defective pixels in the first inspection image with the corresponding pixel values in the second inspection image.

In another embodiment, the registering can further include performing intensity normalization on the second data and/or the third data.

### DESCRIPTION OF DRAWINGS

These and other features will be more readily understood from the following detailed description taken in conjunction with the accompanying drawings, in which:
FIG. 1 is a process flow diagram of an example method for correcting CKPs in inspection image data according to the subject matter described herein;
FIG. 2 is a diagram illustrating an example DDA including one or more CKPs according to the subject matter described herein;
FIG. 3 is a diagram illustrating a position and classification of the one or more CKPs of the DDA of FIG. 2 according to the subject matter described herein;
FIG. 4 is a diagram illustrating first inspection image data acquired using the DDA of FIG. 2 according to the subject matter described herein;
FIG. 5A is a diagram illustrating a physical shift applied to the DDA of FIG. 2 according to the subject matter described herein;
FIG. 5B, is a diagram illustrating a physical shift applied to a plurality of DDAs of FIG. 2, placed next to one another to form a larger DDA, according to the subject matter described herein;
FIG. 6 is a diagram illustrating second inspection image data acquired using the DDA of FIG. 2 according to the subject matter described herein;
FIG. 7 is a diagram illustrating correction of CKPs in the first inspection image data according to the subject matter described herein;
FIG. 8 is a diagram illustrating an example inspection system configured to perform the method of FIG. 1 according to the subject matter described herein; and
FIG. 9 is a block diagram 900 of a computing system suitable for use in implementing the computerized components described herein, such as one or more computing devices of the inspection system of FIG. 8.

It is noted that the drawings are not necessarily to scale. The drawings are intended to depict only typical aspects of the subject matter disclosed herein, and therefore should not be considered as limiting the scope of the disclosure.

### DETAILED DESCRIPTION

DDAs can include areas of defective array elements often called clusters in which one or more pixels in an area can be inoperable to generate inspection data. These clusters may also extend over full or partial pixel lines or columns of the DDA. Depending on the configuration, these defective pixels may be corrected using neighboring pixels. Defective pixels located inside such clusters may be considered uncorrectable, according to standards (e.g. ASTM E2597) and user specifications. These pixels are also referred to as cluster kernel pixels (CKP). Various industries can be very restrictive in accepting imaging data generated using DDAs with a particular amount of defect pixel clusters and of CKPs in particular. These clusters can be considered as blind spots in the imaging data and thus, can be an important issue for object inspection. In some industries, imaging data associated with even one CKP can be banned or DDAs rejected. As a result, inspection operators may need to acquire additional DDA for replacement, which can result in higher inspection ownership and inspection costs, as well as prolonged inspection times and requalification times when replacement DDAs are reconfigured in an inspection environment.

Clusters and CKPs cannot be corrected within a DDA because the defective array elements at which the CKPs are present have a fixed location within the DDA and with respect to the X-ray tube. As a result, otherwise fully functional DDAs may be excluded from use in an inspection due to a single CKP. This can require pre-selected DDAs, which can increase inspection costs, configuration requirements, and inspection timelines. Over time DDAs can still develop defects of detector array elements and CKPs.

The system and methods described herein can correct clusters and namely CKPs so that DDAs can be used over a longer inspection lifespan. By moving the DDA along the X-axis and/or the Y-axis, image data associated with an area of the DDA affected by the CKP (or another detector defect) can be captured by a different area of the DDA that is functional and is not affected by the CKP. Using image data acquired at two or more positions of the DDA, the CKP (or other detector defect) can be corrected and removed in the inspection image data.

The system and methods described herein can detect defective pixels, namely CKPs in DDAs, characterize types of defect pixels or similar electronic malfunction clusters, adjust a location of the DDA by a defined number of pixels, acquire inspection image data based on the adjusted location, and compile the acquired inspection image data such that defect clusters or CKPs are eliminated.

Embodiments of defect pixel correction are discussed herein in regard to DDA use in object inspection. However, embodiments of the disclosure can be employed for defect pixel correction in regard to DDA use in a variety of application or environment without limitation, such as medical imaging.

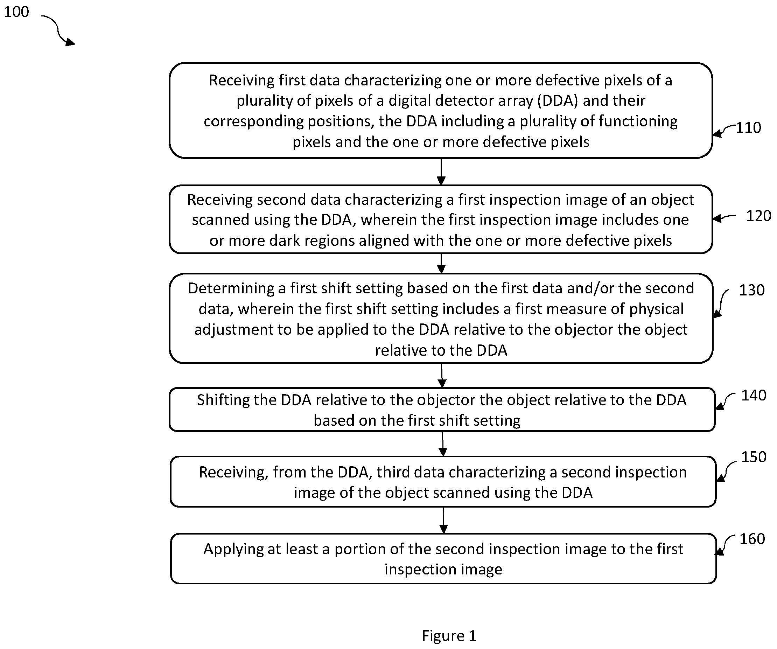

FIG. 1 is a process flow diagram of an example method 100 for correcting defect pixel cluster corrections in inspection image data according to the subject matter described herein. The method 100 can be performed by a data processor communicably coupled to a DDA. As shown in operation 110, first data characterizing at least one defective pixel of a DDA can be received by the data processor. The at least one defective pixel can be in a cluster and can be a CKP. In some embodiments, the defective pixels can be caused by damage, contamination, production imperfections, or electronic malfunction of the DDA.

The first data can include a position of one or more pixels corresponding to a defective cluster or CKP. Based on the first data, a classification of the one or more pixels and the CKP can be determined. This information may be stored and be re-used for further acquisition and correction cycles (such as in operations 120, 130, 140, 150, 160).

In operation 120, the data processor can receive second data characterizing an inspection image of an object. The inspection image can include X-ray image data acquired during an X-ray inspection of the object. Portions of the inspection image data can be invalid or contain no data due to the portion of the inspection image data being related to a portion of the DDA at which the defective cluster or CKP was present. For example, indications of defects of the object in the inspection image data can be located on CKPs or other defective pixels or other defective pixel clusters. The defect may cover the cluster or CKP partially or fully and vice versa.

In operation 130, the data processor can determine a shift setting of the DDA. The shift setting can be a measure of physical adjustment that can be applied to the DDA. The shift setting can identify a shift of the DDA in a horizontal direction (e.g., along the X-axis), a vertical direction (e.g., along the Y-axis), or a combination of horizontal and vertical directions. In some embodiments, the shift setting can include a rotational shift of the DDA about a predefined axis. The shift setting can be defined as an integer number of pixel. In some embodiments, the shift setting can be determined such that the object defect can be located at non-defective pixel locations instead of locations at which pixels associated with defective clusters or CKPs are present.

In some embodiments, the determining of the shift setting can further include determining a size of a largest defective cluster or CKP based on the first data and shifting the DDA based on the largest defective cluster, as discussed in greater detail below.

In operation 140, the DDA can be shifted relative to the object and/or the object can be shifted relative to the DDA based on the shift setting. In some embodiments, the pixels can be renumbered or re-indexed based on the shift setting. In some embodiments, the shifting can be done by a positioning device such as a C-arm, a robotic arm system, a motorized linear stage, or the like. In some embodiments, the positioning device can be a user configured to move the DDA and/or the scanned object manually.

In operation 150, the data processor can receive third data characterizing a second inspection image acquired based on the DDA that has been shifted by the shift setting determined in operation 130.

At operation 160, the data processor can apply at least a portion of the third data to the first inspection image such that inspection image data associated with the non-defective pixels occurring at the positions of the defective pixels are patched into the known positions of the defective pixels. In some embodiments, the data processor can perform intensity normalization when applying the third data. In some embodiments, the corrected first inspection image can be the same size or a different size in a horizontal direction or a vertical direction.

In some embodiments, operations 130-160 can be iteratively performed with different shift setting measures until all or a predetermine threshold number of CKPs (or relevant defective pixels or pixel clusters) can be corrected. In this way, the data processor can determine a shift setting measure that is optimized to account for all CKPs detected in the DDA.

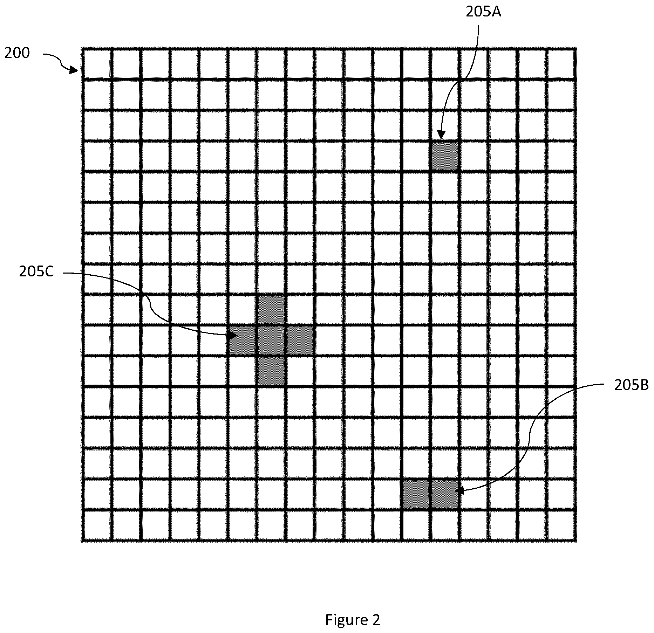

FIG. 2 is a diagram illustrating an example DDA 200 including one or more clusters or CKPs according to the subject matter described herein. As shown in FIG. 2, the DDA 200 can include detector array elements at which one or more defective pixels or CKPs are be present. For example, a cluster 205A can include a single pixel. Cluster 205B can include a pair of defective pixels located next to one another. Cluster 205C can include 5 defective pixels in a cross-formation. Defect pixel clusters can be of any shape including parts of or full lines and columns. Also complete functional areas like read out sections can include defects in the sense of this disclosure. A widely accepted definition of CKPs and classification of clusters can be found in ASTM E2597.

The locations of the clusters can be determined based on a coordinate system associated with the DDA 200. In this way, a location of each cluster 205 can correspond to a coordinate value pair, such as an X-value, Y-value pair.

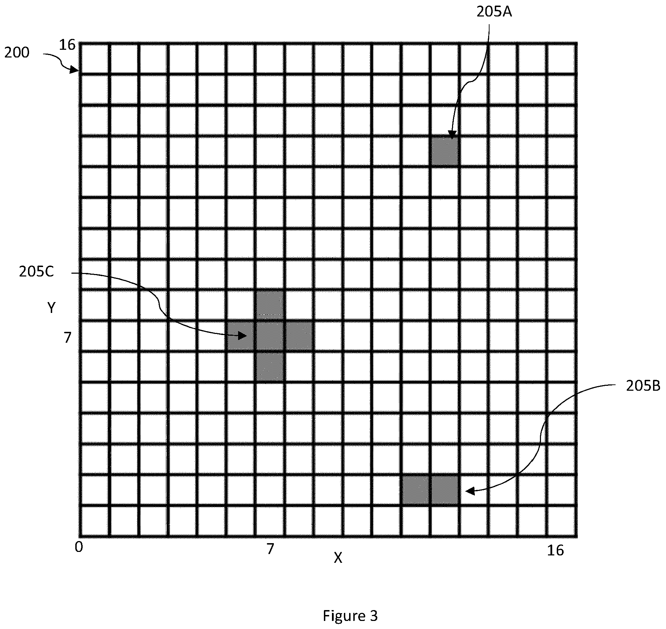

FIG. 3 is a diagram illustrating a position and classification of the one or more clusters of the DDA 200 of FIG. 2 according to the subject matter described herein. As shown in FIG. 3, the cluster 205C can have a position at 7,7 defined in the x,y coordinate system associated with DDA 200. The position of cluster 205C can be determined and stored by the inspection system described herein. A classification for cluster 205C (as well as cluster 205A and cluster 205B) can be determined and stored by the inspection system described herein.

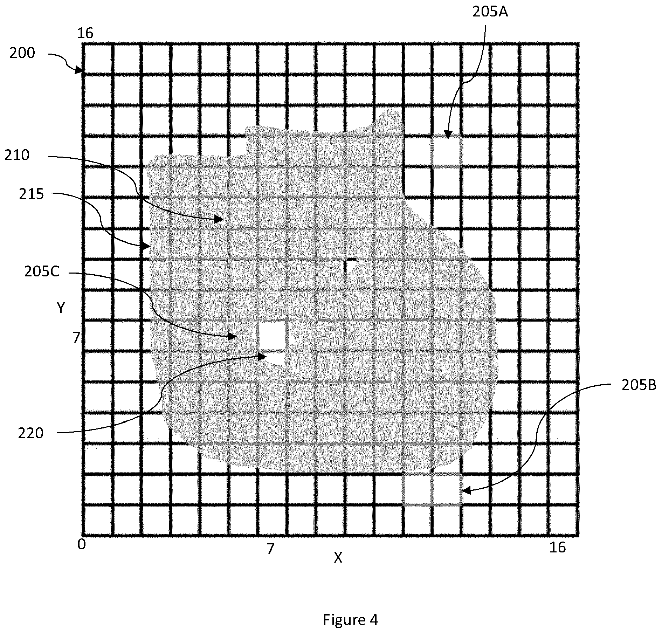

FIG. 4 is a diagram illustrating first inspection image data acquired using the DDA 200 of FIG. 2 according to the subject matter described herein. As shown in FIG. 4, a first inspection image 210 of an object 215 can be acquired. The object can have a defect 220 at a location that corresponds to the location of cluster 205C, for example at position 7, 7 of DDA 200. As shown in FIG. 4, the first inspection image 210 is not located in areas where clusters 205A and 205B are present. In this case, the areas where clusters 205A and 205B are present in the first inspection image can show up as one or more dark regions where no image data is produced.

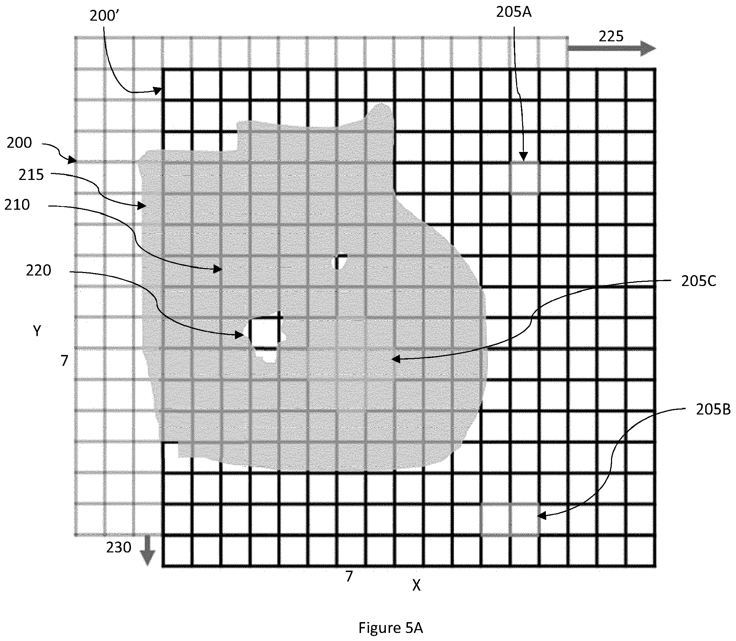

FIG. 5A is a diagram illustrating a physical shift applied to the DDA 200 of FIG. 2, based on the determined shift setting, according to the subject matter described herein. In the case where one or more dark regions exist in the first inspection image, it can be advantageous to shift the DDA 200 and acquire a second inspection image to combine with the first inspection image, such that one or more dark regions of the first inspection can be replaced with accurate image data. Accordingly, as shown in FIG. 5A, the DDA 200 can been shifted from a first position to a new position indicated by 200'. In some embodiments, the shift setting can be determined based on a largest determined region of defective pixels determined on the DDA 200 and/or a largest dark regions determined from a first image of the object. For example, as illustrated in FIG. 3, the system described herein can be configured to receive data characterizing the one or more defective pixels or CKPs 205A-205C. The systems can be configured to determine that the cluster 205C is the largest cluster, having a width of 3 pixels and a height of 3 pixels. Accordingly, the system can determine a first shift, for example a horizontal shift 225 of 3 pixels to the right that is necessary to ensure that all of the pixels of 205C are positioned over functional pixels. The system can further be configured to verify that all of the CKPs 205A-205C are positioned over functioning pixels. If the CKPs 205A-205C are positioned over functional pixels (as is the case after a horizontal shift of 3 pixels to the right), then the determining of the shift setting can be complete. However, for example, if the system determines that the horizontal shift 225 of 3 pixels to the right is not sufficient, and that there are pixels in the CKPs 205A-205C that are positioned over a region of defective pixels, the system can be configured to determine a second shift of the DDA 200 to accommodate for the insufficient first shift. For example, as shown in FIG. 5A the second shift can include a negative vertical shift 230 of 1 pixel down. Alternatively, the first measure of physical adjustment can include a first measure of rotation about a first predetermined axis and/or the second measure of physical adjustment includes a second measure of rotation about a second predetermined axis.

As illustrated in FIG. 5A, after the shift of the DDA 200 from the first position to the second position 200', the defect 220 within the object can is positioned over functional pixels and the location of cluster 205C is no longer associated with the location of the defect 220. The pixels of DDA 200 can be renumbered in regard to the position 200' and the first inspection image and the second inspection image can be combined to create a complete and accurate image of the object, as described herein.

It should be noted that in some severe cases, it may not be possible to shift the DDA 200 in a way such that all of the CKPs 205A-205C or all of the dark regions from the first inspection image are positioned over functional pixels. Accordingly, in this severe case, the computing system can be configured to determine a shift setting that minimizes the number CKPs 205A-205C or dark regions that are positioned over defective pixels when acquiring the second inspection image. The determining of the shift setting in this sever case can be executed similarly to as described above.

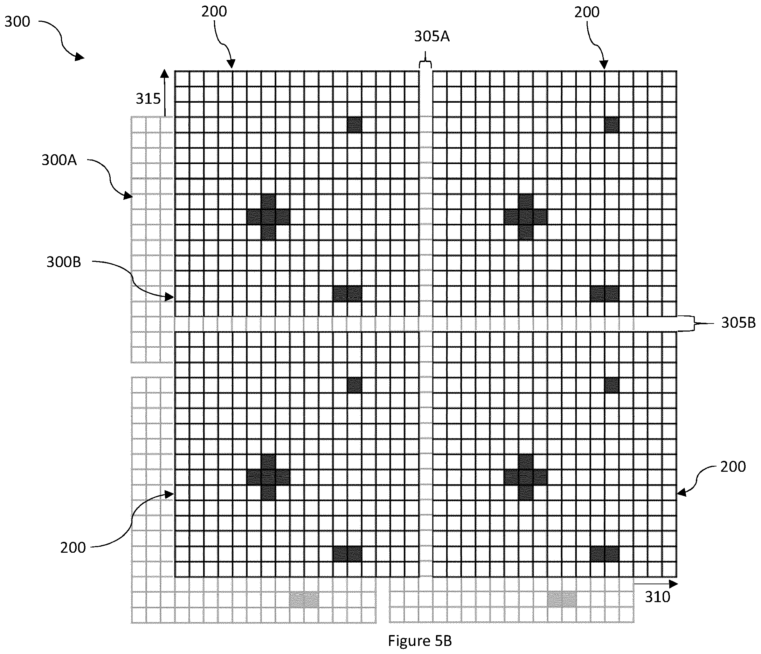

As illustrated in FIG. 5B, in some embodiments, the system can include a plurality of DDAs 200 placed next to one another to form a large DDA 300. In some embodiments, the plurality of DDAs 200 can be photon counting detectors configured to count individual photons and measure their energy. In some embodiments, the photon counting detectors can include Cadmium Telluride (CdTe) detectors and can be coupled to one or more ASIC readout systems configured to convert the signal generated by the CdTe detectors into digitals signal that can be processed and analyzed. In some embodiments, the plurality of DDAs 200 can include one or more gaps 305A and/or 305B located between the DDAs 200 where no pixels exist. In this embodiment, the one or more gaps 305A and/or 305B can be treated similarly to the one or more defective pixels or CKPs described above (e.g. Clusters 205A-205C). Similarly to as described above, in the case where one or more dark regions exist in the first inspection image due to the CKPs and/or the gaps 305A and 305B, it can be advantageous to shift the large DDA 300 and acquire a second inspection image to combine with the first inspection image, such that the one or more dark regions of the first inspection can be replaced with accurate image data. Accordingly, as shown in FIG. 5B, the large DDA 300 can be shifted from a first scanning position 300A to a second scanning position 300B by a large DDA shift setting. As illustrated in FIG. 5B, the large DDA shift setting can be determined to include, for example, a positive horizontal shift 310 of 3 pixels to the right, and a positive vertical shift 315 of 3 pixels up. By shifting the large DDA 300 based on the large DDA shift setting, areas defined by the gaps 305A and 305B can be positioned over functional pixels. The pixels of the large DDA 300 can be renumbered in regard to the position 300B. In some embodiments the one or more gaps 305A and/or 305B can vary in width from a fraction of a pixel wide to multiple pixels wide, and the large DDA shift setting can vary based on the widths of the one or more gaps 305A and/or 305B.

In a case where the one or more gaps 305A and/or 305B have widths of an integer number of pixels, the one or more gaps 305A and/or 305B can be filled with pixel values by moving the detector relative to the object as described above.

Alternatively, in some cases the one or more gaps 305A and/or 305B can have widths that include a fractional number of pixels, or the plurality of DDAs 200 placed next to one another in such a way that the one or more gaps 305A and/or 305B are not uniform in width (e.g. the DDAs are not parallel). In the cases described above, parts, or the entirety of each DDA 200 can be oversampled (e.g. the pixels of the DDA can be divided in to smaller pixels). In this case, the large DDA shift setting can include a shift of a non-integer number of pixels. In this case, the full pixels of the large DDA 300 can be renumbered as described above, and the un-scanned areas defined by the one or more gaps 305A and/or 305B can be interpolated based on the oversampling and resized to the original pixel width.

It should be noted that in some severe cases, it may not be possible to shift the large DDA 300 in a way such that all of the dark regions in the first inspection image resulting from the CKPs and gaps 305A and 305B are positioned over functional pixels. Accordingly, in this severe case, the computing system can be configured to determine a shift setting that minimizes the amount of dark regions resulting from the CKPs and gaps 305A and 305B that are positioned over defective pixels when acquiring the second inspection image. The determining of the shift setting in this sever case can be executed similarly to as described above.

Further, in some cases, the pixels located on the edges of the plurality of DDAs 200 can deviate in from the rest of the pixels in the DDA in radiation detection efficiency, width, and/or proportion. This deviation of the edge pixels can be corrected using the same oversampling technique described above.

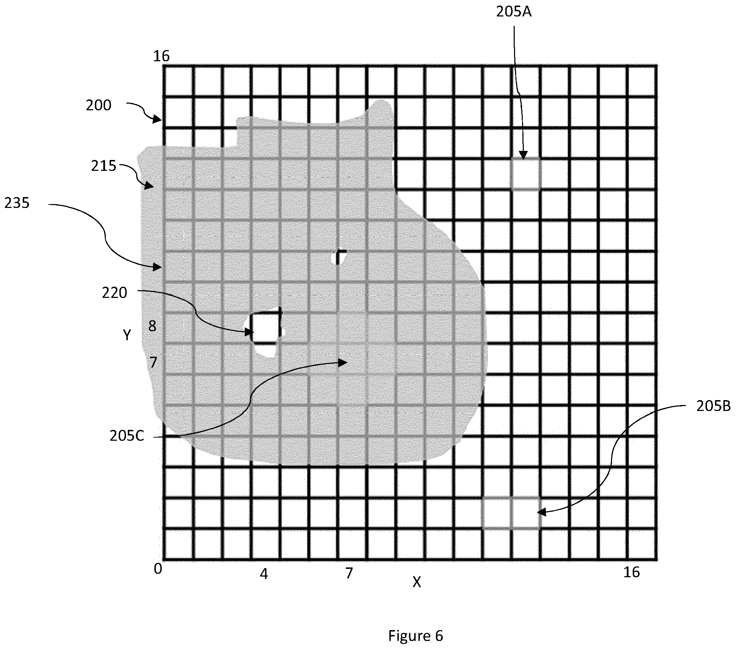

FIG. 6 is a diagram illustrating second inspection image data acquired using the DDA 200 of FIG. 2 according to the subject matter described herein. As shown in FIG. 6, a second inspection image 235 of object 215 can be acquired. The second inspection image 235 can be acquired based on applying the shift settings 225 and 230 to affect the new position 200' and renumbered pixel locations of DDA 200 described in relation to FIG. 5. As a result, the defect 220 can be imaged by functional pixels located at position 4, 8 and the defect 220 is not in a position that is affected by the location of cluster 205C at position 7,7 of DDA 200.

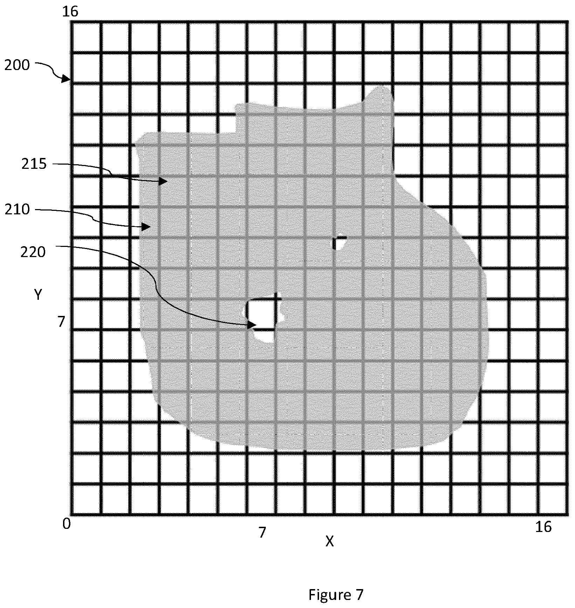

FIG. 7 is a diagram illustrating correction of CKPs in the first inspection image data. As shown in FIG. 7, image data acquired in the second inspection image 235 can be applied or patched on to the first inspection image 210. In this way, image data of the inspection image 215 associated the location of the defect 220 can be provided from functional pixels and the nonfunctional pixels associated with the location of cluster 205C have been corrected in the inspection image data. In some embodiments, applying or patching the image data from the second inspection image 235 onto the first inspection image 210 can be performed using image registration techniques. The pixel values of the defective pixels in the first inspection image may be replaced by those from non-defective pixels in the second inspection image using arithmetical or logic processing after or without intensity normalization of the images.

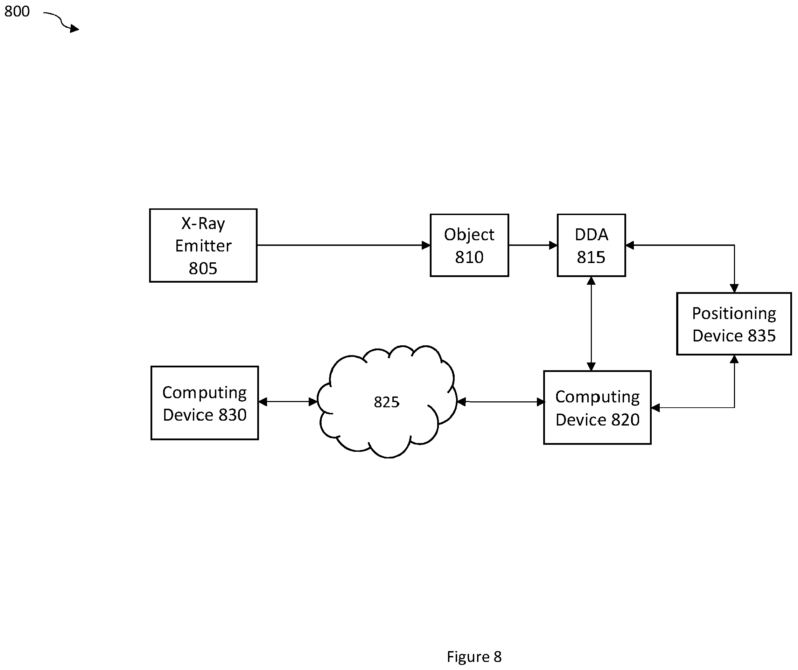

FIG. 8 is a diagram illustrating an example inspection system 800 configured to perform the method of FIG. 1 according to the subject matter described herein. As shown in FIG. 8, the system 800 can include an X-ray emitter 805 configured to transmit X-rays onto an object 810. X-ray signals or image data associated with the object 810 can be received by the DDA 815. A computing device 820 can be communicatively coupled to the DDA 815. The computing device 820 can include a memory storing computer executable instructions, which when executed by a data processor of the computing device 820, perform the method described in relation to FIG. 1 and the functionality of correcting image data at cluster locations of DDA 815 described herein. The computing device 820 can be coupled via a network 825 to additional computing devices 830, such as a remote computing device 830 or a server 830. In some embodiments, the inspection system 800 can further include a positioning device 835. In some embodiments, the positioning device 835 can be a C-arm, a robotic arm system, a motorized linear stage, or the like. In some embodiments, the positioning device 835 can be a user of the inspection system 800 that moves the DDA and/or the scanned object manually.

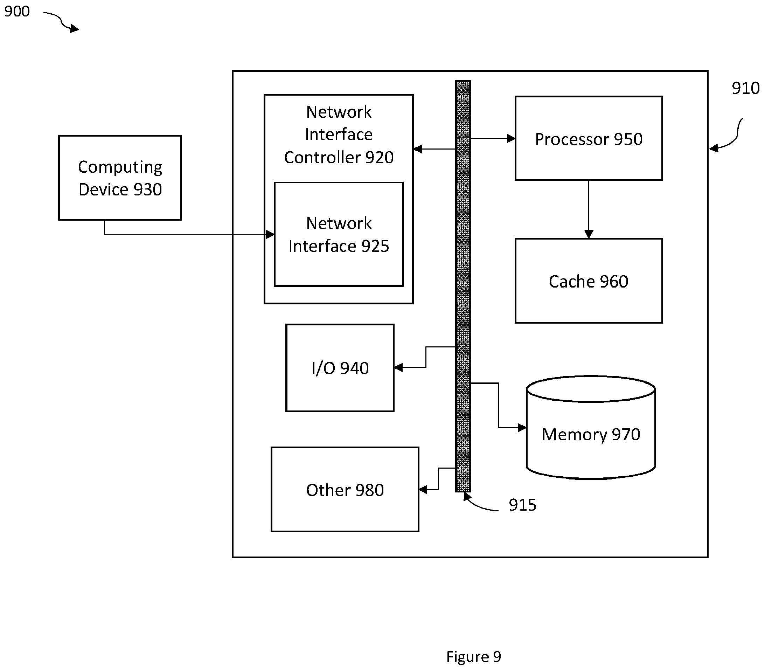

FIG. 9 is a block diagram 900 of a computing system 910 suitable for use in implementing the computerized components described herein, such as one or more computing devices of the inspection system 800 as shown in FIG. 8, such as computing device 820. In broad overview, the computing system 910 includes at least one processor 950 for performing actions in accordance with instructions, and one or more memory devices 960 and/or 970 for storing instructions and data. The illustrated example computing system 910 includes one or more processors 950 in communication, via a bus 915, with memory 970 and with at least one network interface controller 920 with a network interface 925 for connecting to external devices 930, e.g., a computing device (such as a computing device 830). The one or more processors 950 are also in communication, via the bus 915, with each other and with any I/O devices at one or more I/O interfaces 940, and any other devices 980. The processor 950 illustrated incorporates, or is directly connected to, cache memory 960. Generally, a processor will execute instructions received from memory. In some embodiments, the computing system 910 can be configured within a cloud computing environment, a virtual or containerized computing environment, and/or a web-based microservices environment.

In more detail, the processor 950 can be any logic circuitry that processes instructions, e.g., instructions fetched from the memory 970 or cache 960. In many embodiments, the processor 950 is an embedded processor, a microprocessor unit or special purpose processor. The computing system 910 can be based on any processor, e.g., suitable digital signal processor (DSP), or set of processors, capable of operating as described herein. In some embodiments, the processor 950 can be a single core or multi-core processor. In some embodiments, the processor 950 can be composed of multiple processors.

The memory 970 can be any device suitable for storing computer readable data. The memory 970 can be a device with fixed storage or a device for reading removable storage media. Examples include all forms of non-volatile memory, media and memory devices, semiconductor memory devices (e.g., EPROM, EEPROM, SDRAM, flash memory devices, and all types of solid state memory), magnetic disks, and magneto optical disks. A computing device 910 can have any number of memory devices 970.

The cache memory 960 is generally a form of high-speed computer memory placed in close proximity to the processor 950 for fast read/write times. In some implementations, the cache memory 960 is part of, or on the same chip as, the processor 950.

The network interface controller 920 manages data exchanges via the network interface 925. The network interface controller 920 handles the physical, media access control, and data link layers of the Open Systems Interconnect (OSI) model for network communication. In some implementations, some of the network interface controller's tasks are handled by the processor 950. In some implementations, the network interface controller 920 is part of the processor 950. In some implementations, a computing device 910 has multiple network interface controllers 920. In some implementations, the network interface 925 is a connection point for a physical network link, e.g., an RJ 45 connector. In some implementations, the network interface controller 920 supports wireless network connections and an interface port 925 is a wireless Bluetooth transceiver. Generally, a computing device 910 exchanges data with other network devices 930, such as computing device 930, via physical or wireless links to a network interface 925. In some implementations, the network interface controller 920 implements a network protocol such as LTE, TCP/IP Ethernet, IEEE 802.11, IEEE 802.16, Bluetooth, or the like.

The other computing devices 930 are connected to the computing device 910 via a network interface port 925. The other computing device 930 can be a peer computing device, a network device, a server, or any other computing device with network functionality. For example, a computing device 930 can be a computing device 830 associated with a remote user of the inspection system 800 illustrated in FIG. 8. In some embodiments, the computing device 930 can be a network device such as a hub, a bridge, a switch, or a router, connecting the computing device 910 to a data network such as the Internet.

In some uses, the I/O interface 940 supports an input device and/or an output device (not shown). In some uses, the input device and the output device are integrated into the same hardware, e.g., as in a touch screen. In some uses, such as in a server context, there is no I/O interface 940 or the I/O interface 940 is not used. In some uses, additional other components 980 are in communication with the computer system 910, e.g., external devices connected via a universal serial bus (USB).

The other devices 980 can include an I/O interface 940, external serial device ports, and any additional co-processors. For example, a computing system 910 can include an interface (e.g., a universal serial bus (USB) interface, or the like) for connecting input devices (e.g., a keyboard, microphone, mouse, or other pointing device), output devices (e.g., video display, speaker, refreshable Braille terminal, or printer), or additional memory devices (e.g., portable flash drive or external media drive). In some implementations an I/O device is incorporated into the computing system 910, e.g., a touch screen on a tablet device. In some implementations, a computing device 910 includes an additional device 980 such as a co-processor, e.g., a math co-processor that can assist the processor 950 with high precision or complex calculations.

Exemplary technical effects of the methods, systems, and devices described herein include, by way of non-limiting example improved inspection image data and correction of defect pixel clusters and CKP in DDA. The method of correcting clusters and CKPs present in DDAs can address the technical problem of acquiring sufficient quality inspection image data from DDAs that include one or more defective pixels which can produce erroneous inspection results and further cause the DDA to be deemed unusable in an inspection procedure. As a result, inspection costs, inspection timelines, and need for replacing defective DDAs can be reduced.

The subject matter described herein can be implemented in analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Certain exemplary embodiments have been described to provide an overall understanding of the principles of the structure, function, manufacture, and use of the systems, devices, and methods disclosed herein. One or more examples of these embodiments have been illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described embodiments. Accordingly, the present application is not to be limited by what has been particularly shown and described, except as indicated by the appended claims. All publications and references cited herein are expressly incorporated by reference in their entirety.

## Claims

1. A system comprising:
a computing device, including a memory storing computer-executable instructions and at least one data processor communicatively coupled to a digital detector array (DDA) including a plurality of functioning pixels and one or more defective pixels, wherein the at least one data processor is configured to execute the instructions, which cause the at least one data processor to perform operations comprising:
receiving, from the DDA, first data characterizing the one or more defective pixels within the DDA and their corresponding positions;
receiving, from the DDA, second data characterizing a first inspection image of an object scanned using the DDA, wherein the first inspection image includes one or more dark regions aligned with the one or more defective pixels;
determining a first shift setting based on the first data and/or the second data, wherein the first shift setting includes a first measure of physical adjustment to be applied to the DDA relative to the object or the object relative to the DDA;
providing the first shift setting to a positioning device configured to shift the DDA relative to the object or the object relative to the DDA;
receiving, from the DDA, third data characterizing a second inspection image of the object scanned using the DDA; and
applying at least a portion of the second inspection image to the first inspection image.

2. The system of claim 1, wherein the at least one data processor is further configured to perform operations further comprising:
providing the first inspection image including the applied at least a portion of the second image to a user interface display communicatively coupled to the computing device.

3. The system of claim 1, wherein the determining of the first shift setting, by the at least one processor further comprises:
determining a largest dark region of the one or more dark regions; and
determining the first measure of physical adjustment such that the largest dark region is positioned over an area of functioning pixels of the plurality of functioning pixels.

4. The system of claim 3, wherein the determining of the first shift setting, by the at least one processor further comprises:
determining that one or more dark regions other than the largest dark region are positioned over one or more defective pixels; and
determining a second measure of physical adjustment to be applied to the DDA relative to the object or the object relative to the DDA such that the one or more dark regions other than the largest dark region are positioned over an area of functioning pixels of the plurality of functioning pixels.

5. The system of claim 4, wherein the first measure of physical adjustment further includes a measure of movement in a first direction and the second measure of physical adjustment further includes a measure of movement in a second direction.

6. The system of claim 4, wherein the first measure of physical adjustment includes a first measure of rotation about a first predetermined axis and/or the second measure of physical adjustment includes a second measure of rotation about a second predetermined axis.

7. The system of claim 1, further comprising the positioning device chosen from any one of a C-arm system, a robotic arm system, and a motorized linear stage.

8. The system of claim 1, wherein the applying further comprises:
registering the second image to the first image, the registering further comprising
replacing the pixel values of the one or more defective pixels in the first inspection image with the corresponding pixel values in the second inspection image.

9. The system of claim 8, wherein the registering includes performing intensity normalization on the second data and/or the third data.

10. A system comprising:
a computing device, including a memory storing computer-executable instructions and at least one data processor communicatively coupled to a plurality of digital detector arrays (DDAs) placed serially next to one another with a gap of a plurality of gaps defined between each DDA in the plurality, wherein each DDA in the plurality includes a plurality of functioning pixels and one or more defective pixels, further wherein the at least one data processor is configured to execute the instructions, which cause the at least one data processor to perform operations comprising:
receiving, from the plurality of DDAs, first data characterizing the one or more defective pixels of the plurality of pixels of the plurality of DDAs and their corresponding positions;
receiving, from the plurality of DDAs, second data characterizing the plurality of gaps between the plurality of DDAs and their corresponding positions;
receiving, from the plurality of DDAs, third data characterizing a first inspection image of an object scanned using the plurality of DDAs, wherein the first inspection image includes one or more dark regions aligned with the one or more defective pixels and the plurality of gaps;
determining a first shift setting based on the first data, the second data and/or the third data, wherein the first shift setting includes a first measure of physical adjustment to be applied to the plurality of DDAs relative to the object or the object relative to the plurality of DDAs;
providing the first shift setting to a positioning device configured to shift the plurality of DDAs relative to the object;
receiving, from the plurality of DDAs, fourth data characterizing a second inspection image of the object scanned using the plurality of DDAs; and
applying at least a portion of the second inspection image to the first inspection image.

11. The system of claim 10, wherein the determining of the first shift setting, by the at least one processor further comprises:
determining a largest dark region of the one or more dark regions; and
determining the first measure of physical adjustment such that the largest dark region is positioned over an area of functioning pixels of the plurality of functioning pixels.

12. The system of claim 11, wherein the determining of the first shift setting, by the at least one processor further comprises:
determining that one or more dark regions other than the largest dark region are positioned over one or more defective pixels; and
determining a second measure of physical adjustment to be applied to the plurality of DDAs relative to the object or the object relative to the plurality of DDAs such that the one or more dark regions other than the largest dark region are positioned over an area of functioning pixels of the plurality of functioning pixels.

13. A method comprising:
receiving, by at least one processor of a computing system, first data characterizing one or more defective pixels of a plurality of pixels of a digital detector array (DDA) and their corresponding positions, the DDA including a plurality of functioning pixels and the one or more defective pixels;
receiving, by the at least one processor, second data characterizing a first inspection image of an object scanned using the DDA, wherein the first inspection image includes one or more dark regions aligned with the one or more defective pixels;
determining, by the at least one processor, a first shift setting based on the first data and/or the second data, wherein the first shift setting includes a first measure of physical adjustment to be applied to the DDA relative to the object or the object relative to the DDA;
shifting, by a positioning device, the DDA relative to the object or the object relative to the DDA based on the first shift setting;
receiving, from the DDA, third data characterizing a second inspection image of the object scanned using the DDA; and
applying at least a portion of the second inspection image to the first inspection image.

14. The method of claim 11, further comprising:
providing the first inspection image including the applied at least a portion of the second image to a user interface display communicatively coupled to the computing device.

15. The method of claim 11, wherein the determining of the first shift setting further comprises:
determining a largest dark region of the one or more dark regions; and
determining the first measure of physical adjustment such that the largest dark region is positioned over an area of functioning pixels of the plurality of functioning pixels.

16. The method of claim 15, wherein the determining of the first shift setting further comprises:
determining that one or more dark regions other than the largest dark region are positioned over one or more defective pixels; and
determining a second measure of physical adjustment to be applied to the DDA relative to the object or the object relative to the DDA such that the one or more dark regions other than the largest dark region are positioned over an area of functioning pixels of the plurality of functioning pixels.

17. The method of claim 16, wherein the first measure of physical adjustment further includes a measure of movement in a first direction and the second measure of physical adjustment further includes a measure of movement in a second direction.

18. The method of claim 16, wherein the first measure of physical adjustment includes a first measure of rotation about a first predetermined axis and/or the second measure of physical adjustment includes a second measure of rotation about a second predetermined axis.

19. The method of claim 11, wherein the applying further comprises:
registering the second image to the first image, the registering further comprising
replacing the pixel values of the one or more defective pixels in the first inspection image with the corresponding pixel values in the second inspection image.

20. The method of claim 19, wherein the registering includes performing intensity normalization on the second data and/or the third data.
